# EUROPEAN PATENT SPECIFICATION

(11) **EP 2 523 095 B1**
(45) Date of publication and mention of the grant of the patent: **07.03.2018**
(21) Application number: 12165955.1
(22) Date of filing: 27.04.2012
(51) Int. Cl.: G06F 7/57, G06F 7/483, H03K 19/173, G06F 7/544, G06F 7/509

(54) **DSP block with embedded floating point structures**
DSP-Block mit eingebetteten Gleitkommastrukturen
Bloc de DSP avec des structures de virgule flottante intégrées

(30) Priority: 09.05.2011 US 201161483924 P; 21.07.2011 US 201113187801
(43) Date of publication of application: 14.11.2012
(73) Proprietor: Altera Corporation, San Jose, CA 95134 (US)
(72) Inventor: Langhammer, Martin, Wiltshire SP5 3AB (GB)
(74) Representative: Appelt, Christian W.

(56) References cited:
- US-B1- 7 814 136
- Anonymous: "5. DSP Blocks in Stratix III Devices" In: "Stratix III Device Handbook, Volume 1", March 2010 (2010-03), Altera, San Jose, CA, USA, XP055054085, pages 5-1-5-42, * pages 5-1; figures 5-5 * * pages 5-18 - pages 5-19 *
- YOSHICHIKA FUJIOKA ET AL: "240MOPS RECONFIGURABLE PARALLEL VLSI PROCESSOR FOR ROBOT CONTROL", PROCEEDINGS OF IECON 1992, vol. 3, 9 November 1992 (1992-11-09), - 13 November 1992 (1992-11-13), pages 1385-1390, XP000365374, NEW YORK, NY, USA ISBN: 978-0-7803-0582-3

## Description

### Field of the Invention

This invention relates to a programmable integrated circuit device, and particularly to a specialized processing block in a programmable integrated circuit device.

### Background of the Invention

Considering a programmable logic device (PLD) as one example of an integrated circuit device, as applications for which PLDs are used increase in complexity, it has become more common to design PLDs to include specialized processing blocks in addition to blocks of generic programmable logic resources. Such specialized processing blocks may include a concentration of circuitry on a PLD that has been partly or fully hardwired to perform one or more specific tasks, such as a logical or a mathematical operation. A specialized processing block may also contain one or more specialized structures, such as an array of configurable memory elements. Examples of structures that are commonly implemented in such specialized processing blocks include: multipliers, arithmetic logic units (ALUs), barrel-shifters, various memory elements (such as FIFO/LIFO/SIPO/RAM/ ROM/CAM blocks and register files), AND/NAND/OR/NOR arrays, etc., or combinations thereof.

One particularly useful type of specialized processing block that has been provided on PLDs is a digital signal processing (DSP) block, which may be used to process, e.g., audio signals. Such blocks are frequently also referred to as multiply-accumulate ("MAC") blocks, because they include structures to perform multiplication operations, and sums and/or accumulations of multiplication operations.

For example, PLDs sold by Altera Corporation, of San Jose, California, as part of the STRATIX® and ARRIA® families include DSP blocks, each of which includes a plurality of multipliers. Each of those DSP blocks also includes adders and registers, as well as programmable connectors (e.g., multiplexers) that allow the various components of the block to be configured in different ways. An overview on DSP blocks in Stratix III devices can be for example found in the "Stratix III Device Handbook, Volume 1", Altera Corporation, March 2010 (see chapter 5).

Typically, the arithmetic operators (adders and multipliers) in such specialized processing blocks have been fixed-point operators. If floating-point operators were needed, the user would construct them outside the specialized processing block using general-purpose programmable logic of the device, or using a combination of the fixed-point operators inside the specialized processing block with additional logic in the general-purpose programmable logic.

Fujioka et al., "240 MPOS reconfigurable parallel VLSI processor for robot control", IEEE Proceedings of the 1992 International Conference on Industrial Electronics, Control, Instrumentation, and Automation, 1992 proposes an architecture of a reconfigurable parallel VLSI processor to reduce the delay time by improvement of the ratio of the multipliers contained in the processing elements (PEs).

US 7,814,136 B1 shows a programmable system having multiple configurable floating point units ("FPU") that are coupled to multiple programmable logic and routing blocks and multiple memories. Each floating point unit has static configuration blocks and dynamic configuration blocks, where the dynamic configuration blocks can be reconfigured to perform a different floating point unit function. A floating point unit includes a pre-normalization for shifting an exponent calculation as well as shifting and aligning a mantissa, and a post-normalization for normalizing and rounding a received input. The post-normalization receives an input Z and realigns the input, normalizes the input and rounds the input Z.

### Summary of the Invention

The invention provides a programmable integrated circuit device as defined in independent claim 1. Advantageous embodiments are subject to the dependent claims.

In accordance with embodiments of the invention, specialized processing blocks such as the DSP blocks described above are enhanced by including floating-point addition among the functions available in the DSP block. This reduces the need to construct floating-point functions outside the specialized processing block. The addition function may be a wholly or partially dedicated (i.e., "hard logic") implementation of addition in accordance with the IEEE754-1985 standard, and can be used for addition operations, multiply-add (MADD) operations, or vector (dot product) operations, any of which can be either real or complex. The floating-point adder circuit is incorporated into the DSP Block, and can be independently accessed, or used in combination with a multiplier in the DSP block, or even multipliers in adjacent DSP blocks.

The specialized processing block of the programmable integrated circuit device of the invention includes - inter alia - a first floating-point arithmetic operator stage, a second floating-point arithmetic operator stage, and configurable interconnect within the specialized processing block for routing signals into and out of each of the first and second floating-point arithmetic operator stages. The specialized processing block further includes a plurality of block inputs, at least one block output, a direct-connect input from another one of the specialized processing blocks, and a direct-connect output to another one of the specialized processing blocks.

In a further exemplary embodiment of the invention, at least two of said specialized floating-point processing blocks of the programmable integrated circuit device are configured for a vector dot product operation using respective direct connect inputs and respective direct connect output of blocks in said plurality of specialized processing blocks.

### Brief Description of the Drawings

Further features of the invention, its nature and various advantages will be apparent upon consideration of the following detailed description, taken in conjunction with the accompanying drawings, in which like reference characters refer to like parts throughout, and in which:
FIG. 1 shows a logical diagram of an exemplary specialized processing block according to an exemplary implementation;
FIG. 1A shows a logical diagram of an exemplary specialized processing block according to another exemplary implementation;
FIG. 2 shows a more detailed diagram of an exemplary specialized processing block according to an embodiment of the present invention;
FIG. 3 shows an exemplary simplified block diagram of number of exemplary specialized processing blocks;
FIG. 4 shows an exemlplary arrangement of exemplary specialized processing blocks according to an embodiment of the invention configured to perform a dot product;
FIG. 5 shows an exemplary arrangement of exemplary specialized processing blocks similar to FIG. 4 with rounding implemented outside the blocks;
FIG. 6 shows an exemplary selection of datapaths when the exemplary arrangement of FIG. 4 is used to implement a vector dot product operation;
FIG. 7 shows an exemplary dedicated floating point adder block according to an another exemplary implementation;
FIG. 8 shows an exemplary arrangement of a plurality of exemplary dedicated floating point adder blocks of FIG. 7;
FIG. 9 shows an exemplary use of the arrangement of FIG. 8 as a ternary adder tree; and
FIG. 10 is a simplified block diagram of an exemplary system employing a programmable logic device incorporating the present invention.

### Detailed Description of the Invention

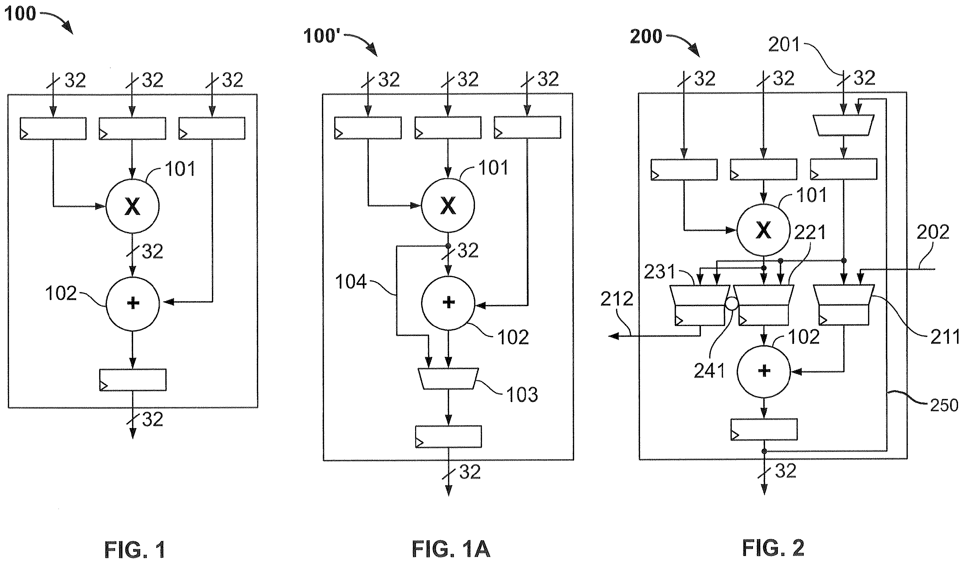

FIG. 1 shows a logical diagram of an exemplary implementation of a DSP block 100. In this logical representation, implementational details, such as registers and some programmable routing features -- such as multiplexers that may allow the output of a particular structure to be routed directly out of block 100 -- are omitted to simplify discussion. In addition, some elements that are shown may, in an actual embodiment, be implemented more than once. For example, the multiplier 101 may actually represent two or more multipliers, as in the DSP blocks of the aforementioned STRATIX® and ARRIA® families of PLDs.

In the logical representation of FIG. 1, the floating-point adder 102 follows a floating-point multiplier 101. The floating-point multiplier may be constructed from a 27x27 fixed-point multiplier supported by the DSP block provided in STRATIX® V or ARRIA® V programmable devices from Altera Corporation, and some additional logic. The additional logic calculates exponents, as well as special and error conditions such as NAN (not-a-number), Zero and Infinity. Optionally, other logic may be provided to round the result of the multiplier to IEEE754 format. Such rounding can be implemented as part of the final adder within the multiplier structure (not shown), or in programmable logic outside the DSP block 100 when the output of the multiplier 101 is outputted directly from the DSP block 100.

The floating point multiplier 101 can feed the floating point adder 102 directly in a multiplier-add (MADD) mode, as depicted in FIG. 1. Alternatively, as depicted in FIG. 1A, the multiplier 101 output can be routed around the adder 102 directly to the output of the DSP block, with a multiplexer 103 provided to select between the output of the multiplier 101 or the output of the adder 102. Although the bypass 104 and multiplexer 103 are omitted from the other drawings to avoid cluttering those drawings, they should be considered to be present in all of the multiplier/adder DSP blocks shown, including that of FIG. 1.

While FIGS. 1 and 1A show exemplary DSP blocks 100 that do not constitute embodiments of this invention, FIG. 2 shows a more detailed diagram of an exemplary DSP block 200 according to an embodiment of this invention. Optionally bypassable pipelining (not shown) may be provided between the floating-point multiplier 101 and the floating-point adder 102. Optionally bypassable pipelining (not shown) can also be provided within either or both of the floating-point multiplier 101 and the floating-point adder 102. Inputs can be routed to the adder 102 from multiple sources, including an output of the multiplier 101, one of the inputs 201 to the DSP block 200, or a direct connection 202 from an adjacent similar DSP block 200.

In addition, the output of multiplier 101 and/or one of the inputs 201 to the DSP block 200, can also be routed via a direct connection 212 to the adder in an adjacent similar DSP block 200 (it being apparent that, except at the ends of a chain of blocks 200, each direct connection 202 receives its input from a direct connection 212, and that each direct connection 212 provides its output to a direct connection 202). Specifically, multiplexer 211 is provided to select either input 201 or direct connection 202 as one input to adder 102. Similarly, multiplexer 221 is provided to select either input 201 or the output of multiplier 101 as another input to adder 102. A third multiplexer 231 is provided to select either input 201 or the output of multiplier 101 as the output to direct connection 212. Thus the inputs to adder 102 can be either input 201 and the output of multiplier 101, or input 201 and direct connection 202, and direct connection 212 can output either input 201 or the output of multiplier 101.

Multiplexer 221 and multiplexer 231, which have the same two inputs (input 201 and the output of multiplier 101), share a control signal, but in the opposite sense as indicated at 241, so that if one of the two multiplexers selects one of those two inputs, the other of the two multiplexers selects the other of those two inputs.

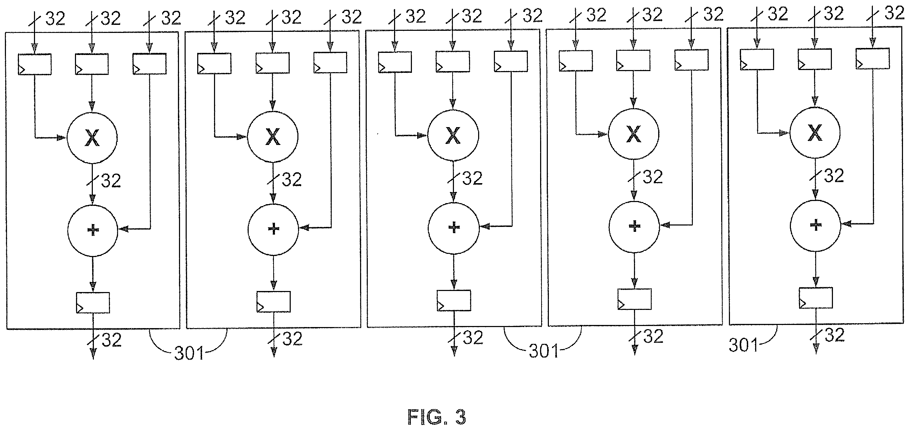

Multiple DSP blocks according to embodiments of the invention may be arranged in a row or column, so that information can be fed from one block to the next using the aforementioned direct connections 202/212, to create more complex structures. FIG. 3 shows a number of exemplary DSP blocks 301 according to an embodiment of the invention, arranged in a row (without showing connections 202/212).

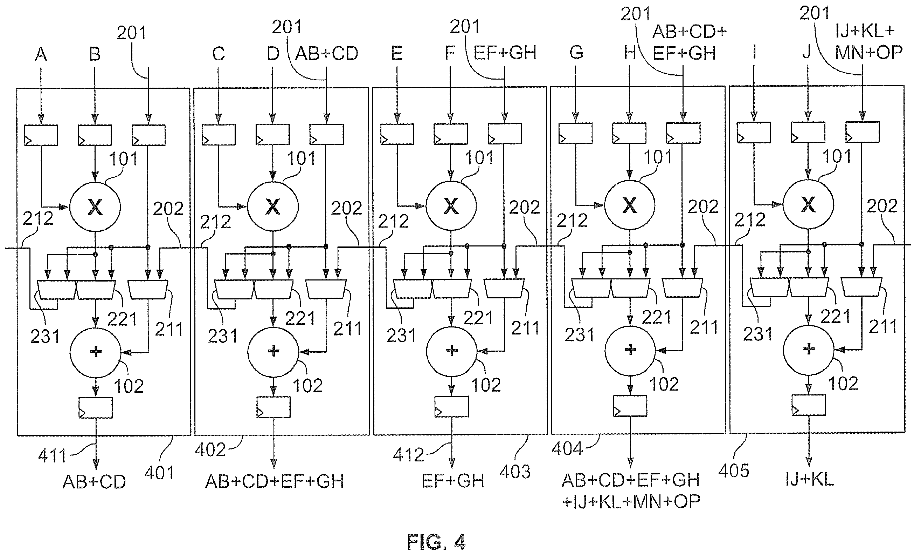

FIG. 4 shows a row of five exemplary DSP blocks 401-405 according to an embodiment of the invention configured to perform a dot product operation. Alternatively, the DSP blocks 401 in that configuration could be arranged in a column (not shown) without changing the inputs and outputs. The drawing shows the interface signals. In each pair of blocks 401/402 and 403/404, the multiplier 101 in each block, along with the adder 102 in the leftmost block 401, 403 of the two blocks, implement a respective sum 411, 412 of two multiplication operations. Those sums 411, 412 are summed with the rightmost adder of the leftmost pair -- i.e., adder 102 of DSP block 402 -- using multiplexer 211 to select input 202 and using multiplexer 221 to select input 201 (to which the respective output 411/412 has been routed, e.g., using programmable interconnect resources of the PLD outside the blocks 401-404) -- to provide a sum of four multiplies. The rightmost adder of the rightmost pair -- i.e., adder 102 of DSP block 404 is used to add this sum of four multiplies to the sum of four multiplies from another set of four DSP blocks beginning with DSP block 405 (remainder not shown). For N multipliers there will be N adders, which is sufficient to implement the adder tree of a dot product, which, for a pair of vectors of length N, is the sum of N multiplication operations.

The same DSP block features can be used to implement a complex dot product. Each second pair of DSP blocks would use a subtraction rather than an addition in the first level addition, which can be supported by the floating-point adder (e.g., by negating one of the inputs, in a straightforward manner). The rest of the adder tree is a straightforward sum construction, similar to that described in the preceding paragraph.

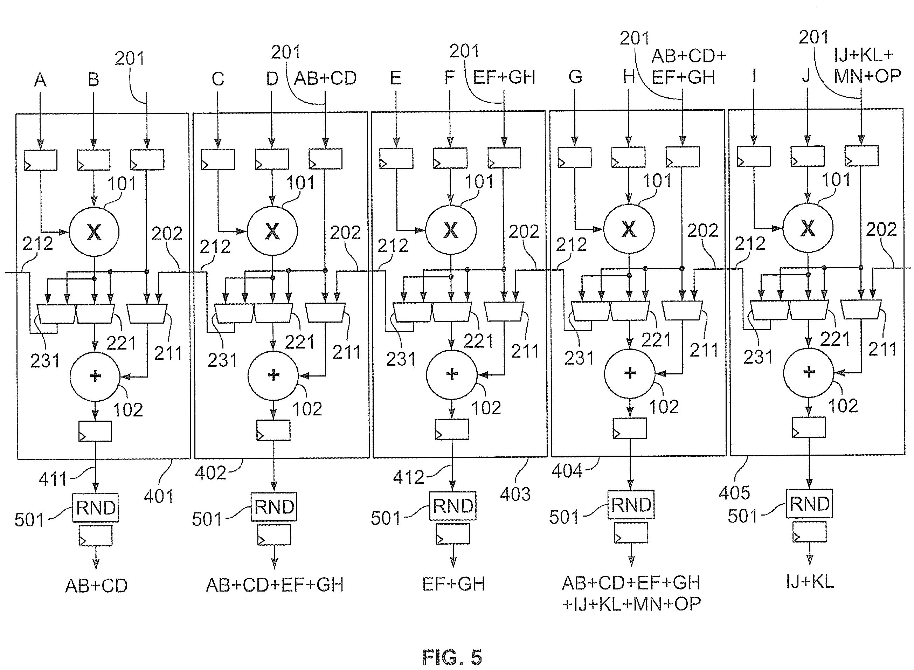

As discussed above, IEEE754-compliant rounding can be provided inside embodiments of the DSP block, or can be implemented in the general-purpose programmable logic portion of the device. FIG. 5 shows as an example the arrangement of FIG. 4 with rounding implemented at 501 outside the block-i.e., in the general-purpose programmable logic portion of the device. The rounding can be implemented with a single level of logic, which may be as simple as a carry-propagate adder, followed by a register. Assuming, as is frequently the case, that all of the outputs of the DSP blocks must be rounded, there would be no disturbance or rebalancing of the datapath required.

Another feature that could be implemented in dedicated logic is the calculation of an overflow condition of the rounded value, which can be determined using substantially fewer resources than the addition. Additional features could calculate the value of a final exponent, or special or error conditions based on the overflow condition.

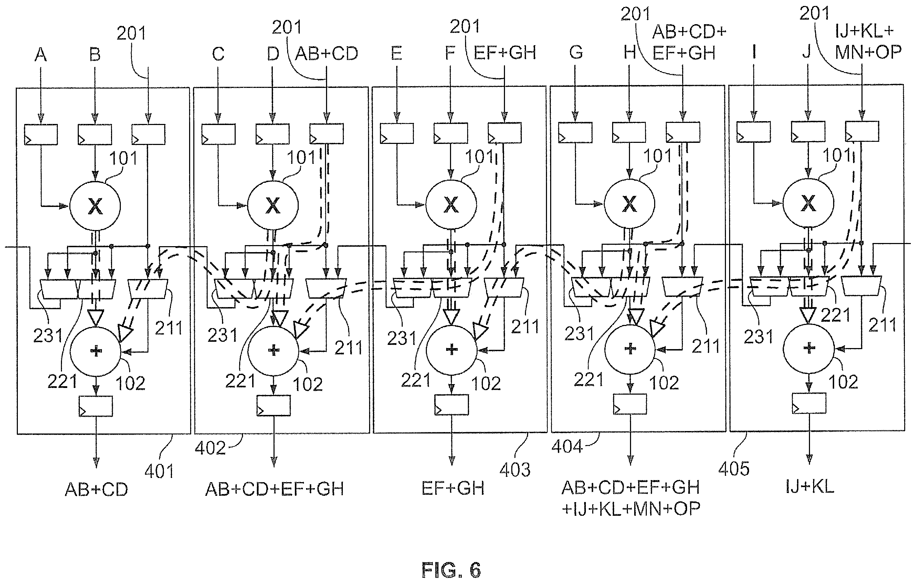

For the illustrated method of adder tree implementation, each DSP block output other than the output of the last block is fed back to the input of another DSP block. In some cases the output is fed back to an input of the same block, such as the EF+GH output 412 in FIG. 4. As seen in FIG. 2, an internal bus 250 may be provided to feed the output register of a block back to an input register, saving routing resources in the general-purpose programmable logic portion of the device. FIG. 6 shows in phantom an exemplary selection of datapaths by multiplexers 211, 221, 231 for the dot product application example described earlier in connection with FIG. 4, showing how adder 102 of each block 401-405 adds a product of the multiplier 101 in that block and a product from an adjacent block.

A dedicated floating-point processing block is a dedicated floating-point adder block. Such a block can be binary (2 input operands) or ternary (3 input operands).

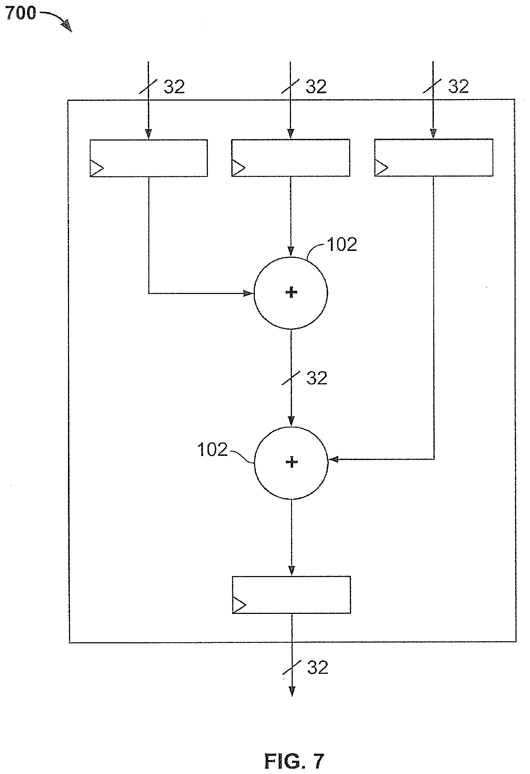

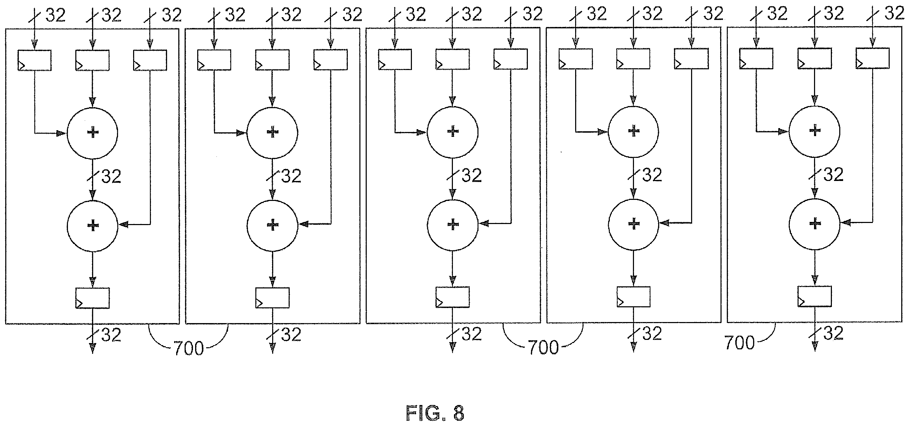

FIG. 7 shows a logical block diagram of an exemplary non-claimed implementation of a ternary adder block 700. As with the previously described DSP block, pipelining may or may not be used internally, and rounding may be supported either internally or externally in programmable logic. Also as with the DSP block, the adder blocks can be arranged in rows, as shown in the example in FIG. 8, or columns. Alternatively, adder blocks can be interleaved (not shown) with the multiplier-adder DSP blocks described above.

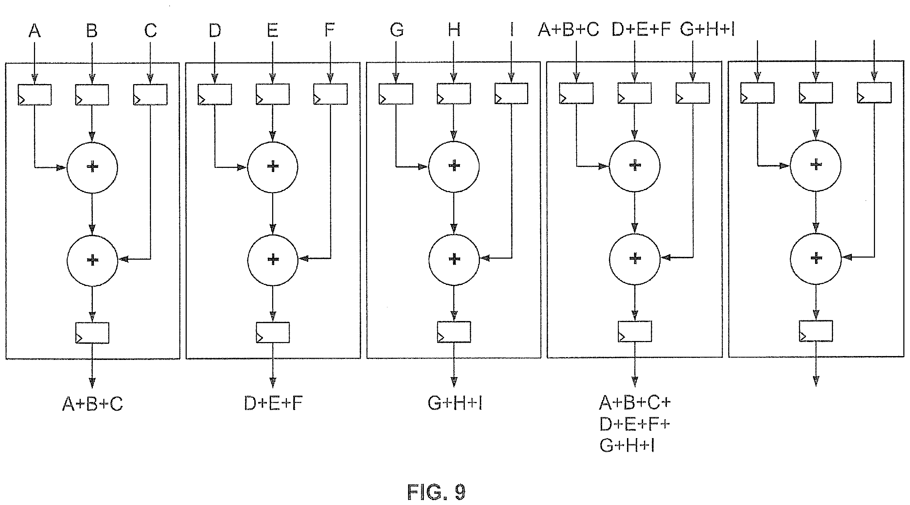

FIG. 9 shows, using labels, exemplary connections used with blocks 700 arranged as in FIG. 8 to make a ternary floating-point adder tree. The ternary adder tree has a depth of log₃N, which is half that of a binary adder. In this example, N=9, and four blocks are arranged in two levels (depth=log₃(9)=2). As discussed above in connection with FIGS. 4 and 5, rounding can be provided either inside or outside the blocks (not shown).

By providing specialized processing blocks, including dedicated but configurable floating point operators, the present invention allows the implementation of certain operations, such as the vector dot product described above, with less reliance on programmable logic outside the blocks.

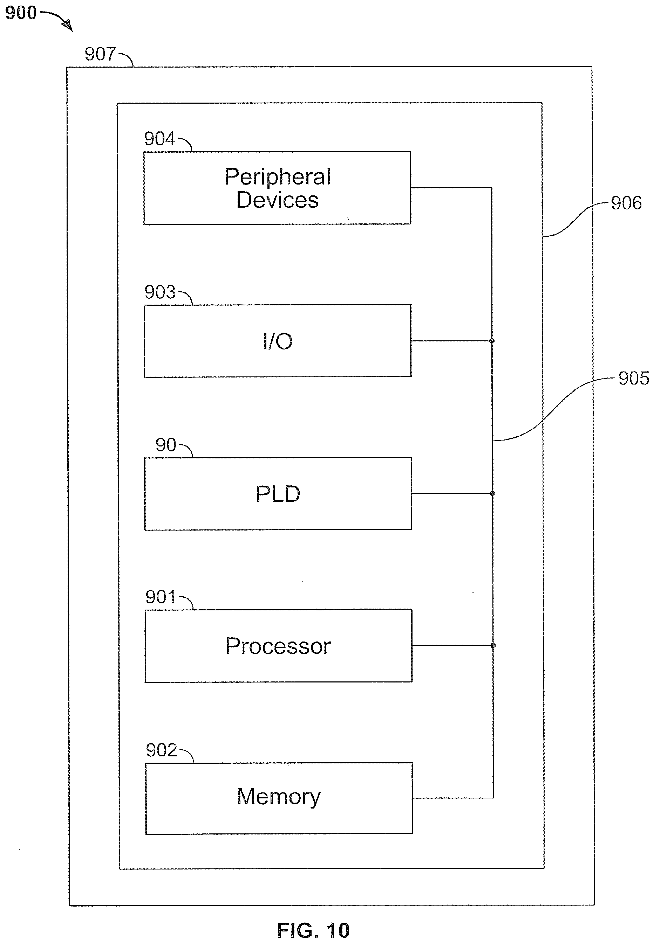

A PLD 90 incorporating specialized processing blocks according to the present invention may be used in many kinds of electronic devices. One possible use is in an exemplary data processing system 900 shown in FIG. 10. Data processing system 900 may include one or more of the following components: a processor 901; memory 902; I/O circuitry 903; and peripheral devices 904. These components are coupled together by a system bus 905 and are populated on a circuit board 906 which is contained in an end-user system 907.

System 900 can be used in a wide variety of applications, such as computer networking, data networking, instrumentation, video processing, digital signal processing, or any other application where the advantage of using programmable or reprogrammable logic is desirable. PLD 90 can be used to perform a variety of different logic functions. For example, PLD 90 can be configured as a processor or controller that works in cooperation with processor 901. PLD 90 may also be used as an arbiter for arbitrating access to a shared resources in system 900. In yet another example, PLD 90 can be configured as an interface between processor 901 and one of the other components in system 900. It should be noted that system 900 is only exemplary.

Various technologies can be used to implement PLDs 90 as described above and incorporating this invention. Specifically, multiplexer 211 may be provided to select either input 201 or direct connection 202 as one input to adder 102. Similarly, multiplexer 221 may be provided to select either input 201 or the output of multiplier 101 as another input to adder 102. A third multiplexer 231 may be provided to select either input 201 or the output of multiplier 101 as the output to direct connection 212. Thus the inputs to adder 102 can be either input 201 and the output of multiplier 101, or input 201 and direct connection 202, and direct connection 212 can output either input 201 or the output of multiplier 101.

In one embodiment, multiplexer 221 and multiplexer 231, which have the same two inputs (input 201 and the output of multiplier 101), share a control signal, but in the opposite sense as indicated at 241, so that if one of the two multiplexers selects one of those two inputs, the other of the two multiplexers selects the other of those two inputs.

Multiple DSP blocks according to embodiments of the invention may be arranged in a row or column, so that information can be fed from one block to the next using the aforementioned direct connections 202/212, to create more complex structures. FIG. 3 shows a number of exemplary DSP blocks 301 according to an embodiment of the invention, arranged in a row (without showing connections 202/212).

FIG. 4 shows a row of five exemplary DSP blocks 401-405 according to an embodiment of the invention configured to perform a dot product operation. Alternatively, the DSP blocks 401 in that configuration could be arranged in a column (not shown) without changing the inputs and outputs. The drawing shows the interface signals. In each pair of blocks 401/402 and 403/404, the multiplier 101 in each block, along with the adder 102 in the leftmost block 401, 403 of the two blocks, implement a respective sum 411, 412 of two multiplication operations. Those sums 411, 412 are summed with the rightmost adder of the leftmost pair -- i.e., adder 102 of DSP block 402 -- using multiplexer 211 to select input 202 and using multiplexer 221 to select input 201 (to which the respective output 411/412 has been routed, e.g., using programmable interconnect resources of the PLD outside the blocks 401-404) -- to provide a sum of four multiplies. The rightmost adder of the rightmost pair -- i.e., adder 102 of DSP block 404 is used to add this sum of four multiplies to the sum of four multiplies from another set of four DSP blocks beginning with DSP block 405 (remainder not shown). For N multipliers there will be N adders, which is sufficient to implement the adder tree of a dot product, which, for a pair of vectors of length N, is the sum of N multiplication operations.

The same DSP block features can be used to implement a complex dot product. Each second pair of DSP blocks would use a subtraction rather than an addition in the first level addition, which can be supported by the floating-point adder (e.g., by negating one of the inputs, in a straightforward manner). The rest of the adder tree is a straightforward sum construction, similar to that described in the preceding paragraph.

As discussed above, IEEE754-compliant rounding can be provided inside embodiments of the DSP block, or can be implemented in the general-purpose programmable logic portion of the device. FIG. 5 shows as an example the arrangement of FIG. 4 with rounding implemented at 501 outside the block-i.e., in the general-purpose programmable logic portion of the device. The rounding can be implemented with a single level of logic, which may be as simple as a carry-propagate adder, followed by a register. Assuming, as is frequently the case, that all of the outputs of the DSP blocks must be rounded, there would be no disturbance or rebalancing of the datapath required.

Another feature that could be implemented in dedicated logic is the calculation of an overflow condition of the rounded value, which can be determined using substantially fewer resources than the addition. Additional features could calculate the value of a final exponent, or special or error conditions based on the overflow condition.

For the illustrated method of adder tree implementation, each DSP block output other than the output of the last block is fed back to the input of another DSP block. In some cases the output is fed back to an input of the same block, such as the EF+GH output 412 in FIG. 4. As seen in FIG. 2, an internal bus may be provided to feed the output register of a block back to an input register, saving routing resources in the general-purpose programmable logic portion of the device. FIG. 6 shows in phantom an exemplary selection of datapaths by multiplexers 211, 221, 231 for the dot product application example described earlier in connection with FIG. 4, showing how adder 102 of each block 401-405 adds a product of the multiplier 101 in that block and a product from an adjacent block.

A dedicated floating-point processing block is a dedicated floating-point adder block. Such a block can be binary (2 input operands) or ternary (3 input operands). FIG. 7 shows a logical block diagram of an exemplary ternary adder block 700. As with the previously described DSP block, pipelining may or may not be used internally, and rounding may be supported either internally or externally in programmable logic. Also as with the DSP block, the adder blocks can be arranged in rows, as shown in the example in FIG. 8, or columns. Alternatively, adder blocks can be interleaved (not shown) with the multiplier-adder DSP blocks described above.

FIG. 9 shows, using labels, exemplary connections used with blocks 700 arranged as in FIG. 8 to make a ternary floating-point adder tree. The ternary adder tree has a depth of log₃N, which is half that of a binary adder. In this example, N=9, and four blocks are arranged in two levels (depth=log₃(9)=2). As discussed above in connection with FIGS. 4 and 5, rounding can be provided either inside or outside the blocks (not shown).

By providing specialized processing blocks, including dedicated but configurable floating point operators, the present invention allows the implementation of certain operations, such as the vector dot product described above, with less reliance on programmable logic outside the blocks.

A PLD 90 incorporating specialized processing blocks according to the present invention may be used in many kinds of electronic devices. One possible use is in an exemplary data processing system 900 shown in FIG. 10. Data processing system 900 may include one or more of the following components: a processor 901; memory 902; I/O circuitry 903; and peripheral devices 904. These components are coupled together by a system bus 905 and are populated on a circuit board 906 which is contained in an end-user system 907.

System 900 can be used in a wide variety of applications, such as computer networking, data networking, instrumentation, video processing, digital signal processing, or any other application where the advantage of using programmable or reprogrammable logic is desirable. PLD 90 can be used to perform a variety of different logic functions. For example, PLD 90 can be configured as a processor or controller that works in cooperation with processor 901. PLD 90 may also be used as an arbiter for arbitrating access to a shared resources in system 900. In yet another example, PLD 90 can be configured as an interface between processor 901 and one of the other components in system 900. It should be noted that system 900 is only exemplary, and that the true scope and spirit of the invention should be indicated by the following claims.

Various technologies can be used to implement PLDs 90 as described above and incorporating this invention.

It will be understood that the foregoing is only illustrative of the principles of the invention. For example, the various elements of this invention can be provided on a PLD in any desired number and/or arrangement. One skilled in the art will appreciate that the present invention can be practiced by other than the described embodiments, which are presented for purposes of illustration and not of limitation.

## Claims

1. A programmable integrated circuit device comprising:
a plurality of specialized processing blocks (200), each of the plurality of specialized processing blocks (200) comprising:
a first floating-point arithmetic operator stage (101) adapted to perform a floating-point multiplication;
a second floating-point arithmetic operator stage (102) adapted to perform a floating-point addition;
at least three block inputs, wherein a first block input and a second block input of said block inputs are connected to said first floating-point arithmetic operator stage (101);
a block output (411);
a direct-connect input (202) for receiving an input from an adjacent previous one of said plurality of specialized processing blocks (200);
a direct-connect output (212) for providing an output to an adjacent next one of said plurality of specialized processing blocks (200); and
a configurable interconnect within the respective specialized processing block (200);
**characterized in that**
each of the plurality of specialized processing blocks (200) is a specialized floating-point processing block (200),
the configurable interconnect comprises:
- a first multiplexer for selecting between a third block input (201) of said block inputs and an output of said second floating-point arithmetic operator stage (102) provided to the first multiplexer via a feedback path, as a first multiplexer output signal;
- a second multiplexer (211) for selecting, as a first input to said second floating-point arithmetic operator stage (102), between the first multiplexer output signal and said direct-connect input (202),
- a third multiplexer (221) for selecting, as a second input to said second floating-point arithmetic operator stage (102), between the first multiplexer output signal and the output of said first floating-point arithmetic operator stage (101) and
- a fourth multiplexer (231) for selecting, as said direct-connect output (212), the other one of the first multiplexer output signal and said output of said first floating-point arithmetic operator stage (101),
wherein said third multiplexer (221) and said fourth multiplexer (231) share opposite senses of a common control signal.

2. The programmable integrated circuit device of claim 1 wherein:
said first floating-point arithmetic operator stage (101) comprises a floating-point multiplier that has bypassable pipelining; and
said second floating-point arithmetic operator stage (102) comprises a floating-point adder that has bypassable pipelining.

3. The programmable integrated circuit device of claim 1 or 2 wherein:
said configurable interconnect comprises a selectable bypass of said second floating-point arithmetic operator stage (102).

4. The programmable integrated circuit device of one of claims 1 to 3 further comprising a programmable logic portion configurable to round outputs of said plurality of specialized processing blocks (200) of said programmable integrated circuit device.

5. The programmable integrated circuit device according to one of claims 1 to 4, further comprising:
an interconnect configurable to route the block output (411) of one (401) of said plurality of specialized processing blocks (200) to the third block input (201) of the adjacent previous one (402) of said plurality of specialized processing blocks (200).

6. The programmable integrated circuit device according to one of claims 1 to 5, further comprising:
an interconnect configurable to route the block output (411) of one (402) of said plurality of specialized processing blocks (200) to the third block input (201) of a second adjacent previous one (404) of said plurality of specialized processing blocks (200).

## Patentansprüche

1. Programmierbare Integrierter-Schaltkreis-Vorrichtung, die Folgendes umfasst:
mehrere spezialisierte Verarbeitungsblöcke (200), wobei jeder der mehreren spezialisierten Verarbeitungsblöcke (200) Folgendes umfasst:
eine erste Gleitkommaarithmetikoperatorstufe (101), die dazu ausgelegt ist, eine Gleitkommamultiplikation durchzuführen;
eine zweite Gleitkommaarithmetikoperatorstufe (102), die dazu ausgelegt ist, eine Gleitkommaaddition durchzuführen;
wenigstens drei Blockeingänge, wobei ein erster Blockeingang und ein zweiter Blockeingang der Blockeingänge mit der ersten Gleitkommaarithmetikoperatorstufe (101) verbunden sind; einen Blockausgang (411);
einen Direktverbindungseingang (202) zum Empfangen einer Eingabe von einem angrenzenden vorherigen der mehreren spezialisierten Verarbeitungsblöcke (200);
einen Direktverbindungsausgang (212) zum Liefern einer Ausgabe an einen angrenzenden nächsten der mehreren spezialisierten Verarbeitungsblöcke (200); und
eine konfigurierbare Zwischenverbindung innerhalb des jeweiligen spezialisierten Verarbeitungsblocks (200);
**dadurch gekennzeichnet, dass**
jeder der mehreren spezialisierten Verarbeitungsblöcke (200) ein spezialisierter Gleitkommaverarbeitungsblock (200) ist,
wobei die konfigurierbare Zwischenverbindung Folgendes umfasst:
- einen ersten Multiplexer zum Wählen zwischen einem dritten Blockeingang (201) der Blockeingänge und einem Ausgang der zweiten Gleitkommaarithmetikoperatorstufe (102), der über einen Rückkopplungspfad an den ersten Multiplexer geliefert wird, als ein erstes Multiplexerausgangssignal;
- einen zweiten Multiplexer (211) zum Wählen zwischen dem ersten Multiplexerausgangssignal und dem Direktverbindungseingang (202) als ein erster Eingang für die zweite Gleitkommaarithmetikoperatorstufe (102),
- einen dritten Multiplexer (221) zum Wählen zwischen dem ersten Multiplexerausgangssignal und dem Ausgang der ersten Gleitkommaarithmetikoperatorstufe (101) als ein zweiter Eingang für die zweite Gleitkommaarithmetikoperatorstufe (102) und
- einen vierten Multiplexer (231) zum Wählen des anderen des ersten Multiplexerausgangssignals und des Ausgangs der ersten Gleitkommaarithmetikoperatorstufe (101) als den Direktverbindungsausgang (212),
wobei der dritte Multiplexer (221) und der vierte Multiplexer (231) entgegengesetzte Richtungen eines gemeinsamen Steuersignals teilen.

2. Programmierbare Integrierter-Schaltkreis-Vorrichtung nach Anspruch 1, wobei:
die erste Gleitkommaarithmetikoperatorstufe (101) einen Gleitkommamultiplikator umfasst, der ein umgehbares Pipelining aufweist;
die zweite Gleitkommaarithmetikoperatorstufe (102) einen Gleitkommaaddierer umfasst, der ein umgehbares Pipelining aufweist.

3. Programmierbare Integrierter-Schaltkreis-Vorrichtung nach Anspruch 1 oder 2, wobei:
die konfigurierbare Zwischenverbindung eine wählbare Umgehung der zweiten Gleitkommaarithmetikoperatorstufe (102) umfasst.

4. Programmierbare Integrierter-Schaltkreis-Vorrichtung nach einem der Ansprüche 1 bis 3, die ferner einen programmierbaren Logikteil umfasst, der dazu konfigurierbar ist, Ausgaben der mehreren spezialisierten Verarbeitungsblöcke (200) der programmierbaren Integrierter-Schaltkreis-Vorrichtung zu runden.

5. Programmierbare Integrierter-Schaltkreis-Vorrichtung nach einem der Ansprüche 1 bis 4, die ferner Folgendes umfasst:
eine Zwischenverbindung, die dazu konfigurierbar ist, den Blockausgang (411) von einem (401) der mehreren spezialisierten Verarbeitungsblöcke (200) an den dritten Blockeingang (201) des angrenzenden vorherigen (402) der mehreren spezialisierten Verarbeitungsblöcke (200) zu leiten.

6. Programmierbare Integrierter-Schaltkreis-Vorrichtung nach einem der Ansprüche 1 bis 5, die ferner Folgendes umfasst:
eine Zwischenverbindung, die dazu konfigurierbar ist, den Blockausgang (411) von einem (402) der mehreren spezialisierten Verarbeitungsblöcke (200) an den dritten Blockeingang (201) eines zweiten angrenzenden vorherigen (404) der mehreren spezialisierten Verarbeitungsblöcke (200) zu leiten.

## Revendications

1. Dispositif à circuit intégré programmable comprenant :
une pluralité de blocs de traitement spécialisé (200), chacun de la pluralité de blocs de traitement spécialisé (200) comprenant :
un premier étage d'opérateur arithmétique à virgule flottante (101) adapté pour effectuer une multiplication en virgule flottante ;
un deuxième étage d'opérateur arithmétique à virgule flottante (102) adapté pour effectuer une addition en virgule flottante ;
au moins trois entrées de bloc, une première entrée de bloc et une deuxième entrée de bloc desdites entrées de bloc étant connectées audit premier étage d'opérateur arithmétique à virgule flottante (101) ;
une sortie de bloc (411) ;
une entrée en connexion directe (202) destinée à recevoir une entrée d'un bloc adjacent précédent de ladite pluralité de blocs de traitement spécialisé (200) ;
une sortie en connexion directe (212) destinée à délivrer une sortie à un bloc adjacent suivant de ladite pluralité de blocs de traitement spécialisé (200) ; et
une interconnexion configurable à l'intérieur du bloc de traitement spécialisé respectif (200) ;
**caractérisé en ce que**
chacun de la pluralité de blocs de traitement spécialisé (200) est un bloc de traitement spécialisé à virgule flottante (200),
l'interconnexion configurable comprend :
- un premier multiplexeur destiné à choisir entre une troisième entrée de bloc (201) desdites entrées de bloc et une sortie dudit deuxième étage d'opérateur arithmétique à virgule flottante (102) délivrée au premier multiplexeur par une chaîne de réaction, en tant que premier signal de sortie de multiplexeur,
- un deuxième multiplexeur (211) destiné à choisir, en tant que première entrée dudit deuxième étage d'opérateur arithmétique à virgule flottante (102), entre le premier signal de sortie de multiplexeur et ladite entrée en connexion directe (202),
- un troisième multiplexeur (221) destiné à choisir, en tant que deuxième entrée dudit deuxième étage d'opérateur arithmétique à virgule flottante (102), entre le premier signal de sortie de multiplexeur et la sortie dudit premier étage d'opérateur arithmétique à virgule flottante (101), et
- un quatrième multiplexeur (231) destiné à choisir, en tant que ladite sortie en connexion directe (212), l'autre du premier signal de sortie de multiplexeur et de ladite sortie dudit premier étage d'opérateur arithmétique à virgule flottante (101),
dans lequel ledit troisième multiplexeur (221) et ledit quatrième multiplexeur (231) partagent des sens opposés d'un signal de commande commun.

2. Dispositif à circuit intégré programmable de la revendication 1 dans lequel :
ledit premier étage d'opérateur arithmétique à virgule flottante (101) comprend un multiplicateur à virgule flottante qui a un pipeline contournable ; et
ledit deuxième étage d'opérateur arithmétique à virgule flottante (102) comprend un additionneur à virgule flottante qui a un pipeline contournable.

3. Dispositif à circuit intégré programmable de la revendication 1 ou 2 dans lequel :
ladite interconnexion configurable comprend un contournement sélectionnable dudit deuxième étage d'opérateur arithmétique à virgule flottante (102).

4. Dispositif à circuit intégré programmable d'une des revendications 1 à 3 comprenant en outre une partie logique programmable configurable pour arrondir des sorties de ladite pluralité de blocs de traitement spécialisé (200) dudit dispositif à circuit intégré programmable.

5. Dispositif à circuit intégré programmable d'une des revendications 1 à 4, comprenant en outre :
une interconnexion configurable pour acheminer la sortie de bloc (411) d'un (401) de ladite pluralité de blocs de traitement spécialisé (200) jusqu'à la troisième entrée de bloc (201) du bloc adjacent précédent (402) de ladite pluralité de blocs de traitement spécialisé (200).

6. Dispositif à circuit intégré programmable d'une des revendications 1 à 5, comprenant en outre :
une interconnexion configurable pour acheminer la sortie de bloc (411) d'un (402) de ladite pluralité de blocs de traitement spécialisé (200) jusqu'à la troisième entrée de bloc (201) d'un deuxième bloc adjacent précédent (404) de ladite pluralité de blocs de traitement spécialisé (200).
